# EUROPEAN PATENT APPLICATION

(11) **EP 3 187 994 A1**
(43) Date of publication of application: **05.07.2017**
(21) Application number: 14900629.8
(22) Date of filing: 31.10.2014
(51) Int. Cl.: G06F 3/0484

(54) **NOTIFICATION INFORMATION COMBINATION METHOD AND NOTIFICATION INFORMATION COMBINATION APPARATUS**

(30) Priority: 29.08.2014 CN 201410438055
(71) Applicant: Yulong Computer Telecommunication Scientific (Shenzhen) Co. Ltd., Shenzhen, Guangdong 518057 (CN)
(72) Inventor: JING, Xueying, Shenzhen Guangdong 518057 (CN)
(74) Representative: Cordina, Kevin John
(86) International application number: PCT/CN2014/090099
(87) International publication number: WO 2016/029544

(57) **Abstract**

A notification information combination method and a notification information combination apparatus are provided. The notification information combination method includes: receiving notification information by a current system of a terminal from any target system of plurality of systems of the terminal; and combining the received notification information with other notification information received from the target system, and using the combined notification information as target notification information of the target system. By utilizing the notification information combination method and notification information combination apparatus, notification information of different systems can be classified according to the systems, so as to reduce a number of times of switching the systems when a user views notification information of different systems in the current system, and improve the use experience.

## Description

### CROSS-REFERENCE TO RELATED APPLICATIONS

This application claims priority of Chinese Patent Application No. 201410438055.0, entitled "a notification information combination method and a notification information combination apparatus," filed on August 29, 2014 in the SIPO (State Intellectual Property Office of the People's Republic of China), the entire contents of which are incorporated by reference herein.

### FIELD

The embodiments of the present disclosure relate to terminal technology, and specifically to a notification information combination method and a notification information combination apparatus.

### BACKGROUND

Currently, a plurality of systems may be installed in a terminal. When any one system of the plurality of systems receives notification information, the notification information will be displayed in a drop down list of a current system, for viewing by a user. However, the notification information is arranged in a time sequence, thus, the user needs to frequently switch between different systems to view different notification information. Accordingly, it is inconvenient for the user, and frequent switching operations between the systems wastes energy of the terminal.

Therefore, reducing a number of times of switching the systems when the user views notification information received from different systems is problematic.

### SUMMARY

To solve the above problem, the present disclosure provides a new way, which can classify notification information of different systems according to the systems, thereby reducing a number of times of switching the systems when a user views notification information received from different systems, and improving user experience efficiently.

Therefore, according to one aspect of the present disclosure, a notification information combination method is provided. The notification information combination method, which is applied in a terminal, includes: receiving notification information by a current system of the terminal from any target system of the plurality of systems; and combining the received notification information with other notification information received from the target system, and using the combined notification information as target notification information of the target system.

In the above embodiment, when an information center of the current system receives notification information from one other target system, the information center of the current system may combine the notification information with other notification information received from the target system, and display the combined notification information for the user. Therefore, notification information of the information center can be classified according to systems, not only the user may know a quantity of notification information of each system clearly, but also frequent switching operations between the systems can be avoided.

In the above embodiment, preferably, the notification information combination method further includes: in response to a received display setting command, distinguishing and displaying target notification information of each system of the plurality of systems.

In the above embodiment, by distinguishing and displaying target notification information of each system, the target notification information of each system may be more noticeable, and senses of the user can be further enhanced to provide a sufficient prompt for the user.

In the above embodiment, preferably, the target notification information of each system of the plurality of systems is distinguished and displayed by: distinguishing and displaying the target notification information of each system of the plurality of systems in different display colors, display formats and/or display fonts.

In the above embodiment, ways for distinguishing and displaying the target notification information may include, but are not limited to, above mentioned ways, such as setting an identifier for the target notification information of each system so as to distinguish and display the target notification information of each system, for example.

In the above embodiment, preferably, the notification information combination method further includes: when the current system of the terminal receives an execution command for processing target notification information of any target system, determining whether to prompt a user to input an encrypted password of the target notification information according to a determination result that determines whether the target notification information has been encrypted.

In the above embodiment, determining whether to prompt the user to input the encrypted password, according to the determination result that determines whether the user has encrypted the target notification information, can improve the user experience.

In the above embodiment, preferably, the notification information combination method further includes: when target notification information of any other target system of the plurality of systems needs to be processed in the current system of the terminal, switching the current system to the target system and processing the target notification information of the target system in the target system; or processing the target notification information in the current system.

In the above embodiment, when the user processes the target notification information of the other target system in the current system, the user may select to stay in the current system or switch to the other target system, for processing the target notification information. This can satisfy requirements of different users, and can further improve the user experience. For example, if the user feels inconvenient to switch between the systems, the user can select to process the target notification information in the current system. If the user feels that it is too slow to process the target notification information in the current system, the current system can be switched to one target system that the target notification information belongs to, and then the target notification information can be processed.

According to a second aspect of the present disclosure, a notification information combination apparatus in a terminal, which includes a plurality of systems, includes: a receiving unit configured to receive notification information by a current system of the terminal from any target system of the plurality of systems; and a combination unit configured to combine the received notification information with other notification information received from the target system, and use the combined notification information as target notification information of the target system.

In the above embodiment, when an information center of the current system receives notification information from one other target system, the information center of the current system may combine the notification information with other notification information received from the target system, and display the combined notification information for the user. Therefore, notification information of the information center can be classified according to systems, not only the user may know a quantity of notification information of each system clearly, but also frequent switching operations between the systems can be avoided.

In the above embodiment, preferably, the notification information combination apparatus further includes a display unit configured to distinguish and display target notification information of each system of the plurality of systems in response to a received display setting command.

In the above embodiment, by distinguishing and displaying target notification information of each system, the target notification information of each system may be more noticeable, and senses of the user can be further enhanced to provide a sufficient prompt for the user.

In the above embodiment, preferably, the display unit is further configured to distinguish and display the target notification information of each system of the plurality of systems in different display colors, display formats and/or display fonts.

In the above embodiment, ways for distinguishing and displaying the target notification information may include, but are not limited to, above mentioned ways, such as setting an identifier for the target notification information of each system so as to distinguish and display the target notification information of each system, for example.

In the above embodiment, preferably, the notification information combination apparatus further includes a prompt unit configured to, when the current system of the terminal receives an execution command for processing target notification information of any target system, determine whether to prompt a user to input an encrypted password of the target notification information according to a determination result that determines whether the target notification information has been encrypted.

In the above embodiment, determining whether to prompt the user to input the encrypted password, according to the determination result that determines whether the user has encrypted the target notification information, can improve the user experience.

In the above embodiment, preferably, the notification information combination apparatus further includes a processing unit configured to, when target notification information of any other target system of the plurality of systems needs to be processed in the current system of the terminal: switch the current system to the target system and process the target notification information of the target system in the target system; or process the target notification information in the current system.

In the above embodiment, when the user processes the target notification information of the other target system in the current system, the user may select to stay in the current system or switch to the other target system, for processing the target notification information. This can satisfy requirements of different users, and can further improve the user experience. For example, if the user feels inconvenient to switch between the systems, the user can select to process the target notification information in the current system. If the user feels that it is too slow to process the target notification information in the current system, the current system can be switched to one target system that the target notification information belongs to, and then the target notification information can be processed.

By utilizing the above embodiments, notification information of different systems can be classified according to the systems, so as to reduce a number of times of switching the systems when a user views notification information of different systems in the current system, and improve the use experience.

### BRIEF DESCRIPTION OF THE DRAWINGS

FIG. 1 shows a flowchart of one embodiment of a notification information combination method according to the present disclosure;
FIG. 2 shows a schematic diagram of one embodiment of a notification information combination apparatus according to the present disclosure;
FIG. 3 shows a schematic diagram of one embodiment of a combination result of notification information according to the present disclosure;
FIG. 4 shows a schematic diagram of one embodiment of a password input prompt for a user according to the present disclosure.

### DETAILED DESCRIPTION

For clarity of illustration of objectives, features and advantages of the present disclosure, where appropriate, the above drawings combined with detailed description illustrate the embodiments of the present disclosure hereinafter. It may be appreciated that different embodiments and elements in the different embodiment of the present disclosure can be combined, when there is no conflict.

The embodiments described herein are for better understanding of the present disclosure, other embodiments can also be practiced. The description is not to be considered as limiting the scope of the embodiments described herein.

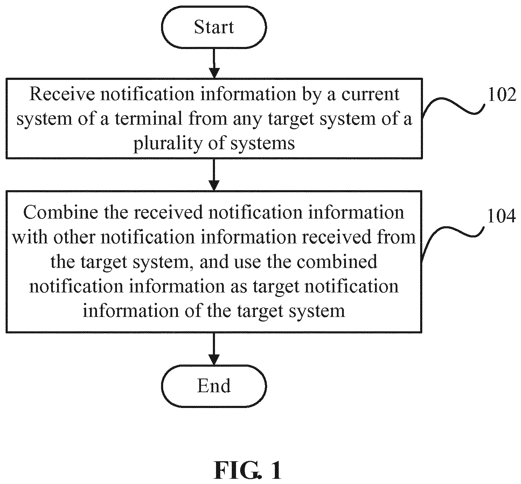

FIG. 1 shows a flowchart of one embodiment of a notification information combination method according to the present disclosure.

As shown in FIG. 1, according to one embodiment of the present disclosure, the notification information combination method includes: step 102, receiving notification information by a current system of a terminal from any target system of a plurality of systems of the terminal; and step 104, combining the received notification information with other notification information received from the target system, and using the combined notification information as target notification information of the target system.

In the above embodiment, when an information center of the current system receives notification information from one other target system, the information center of the current system may combine the notification information with other notification information received from the target system, and display the combined notification information for the user. Therefore, notification information of the information center can be classified according to systems, not only the user may know a quantity of notification information of each system clearly, but also frequent switching operations between the systems can be avoided.

In the above embodiment, preferably, the notification information combination method further includes: in response to a received display setting command, distinguishing and displaying target notification information of each system of the plurality of systems.

In the above embodiment, by distinguishing and displaying target notification information of each system, the target notification information of each system may be more noticeable, and senses of the user can be further enhanced to provide a sufficient prompt for the user.

In the above embodiment, preferably, the target notification information of each system of the plurality of systems is distinguished and displayed by: distinguishing and displaying the target notification information of each system of the plurality of systems in different display colors, display formats and/or display fonts.

In the above embodiment, ways for distinguishing and displaying the target notification information may include, but are not limited to, above mentioned ways, such as setting an identifier for the target notification information of each system so as to distinguish and display the target notification information of each system, for example.

In the above embodiment, preferably, the notification information combination method further includes: when the current system of the terminal receives an execution command for processing target notification information of any target system, determining whether to prompt a user to input an encrypted password of the target notification information according to a determination result that determines whether the target notification information has been encrypted.

In the above embodiment, determining whether to prompt the user to input the encrypted password, according to the determination result that determines whether the user has encrypted the target notification information, can improve the user experience.

In the above embodiment, preferably, the notification information combination method further includes: when target notification information of any other target system of the plurality of systems needs to be processed in the current system of the terminal, switching the current system to the target system and processing the target notification information of the target system in the target system; or processing the target notification information in the current system.

In the above embodiment, when the user processes the target notification information of the other target system in the current system, the user may select to stay in the current system or switch to the other target system, for processing the target notification information. This can satisfy requirements of different users, and can further improve the user experience. For example, if the user feels inconvenient to switch between the systems, the user can select to process the target notification information in the current system. If the user feels that it is too slow to process the target notification information in the current system, the current system can be switched to one target system that the target notification information belongs to, and then the target notification information can be processed.

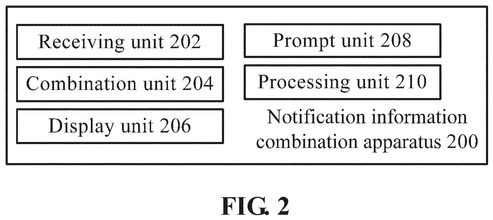

FIG. 2 shows a schematic diagram of one embodiment of a notification information combination apparatus according to the present disclosure.

As shown in FIG. 2, according to one embodiment of the present disclosure, the notification information combination apparatus 200 includes: a receiving unit 202 configured to receive notification information by a current system of a terminal from any target system of a plurality of systems; and a combination unit 204 configured to combine the received notification information with other notification information received from the target system, and use the combined notification information as target notification information of the target system.

In the above embodiment, when an information center of the current system receives notification information from one other target system, the information center of the current system may combine the notification information with other notification information received from the target system, and display the combined notification information for the user. Therefore, notification information of the information center can be classified according to systems, not only the user may know a quantity of notification information of each system clearly, but also frequent switching operations between the systems can be avoided.

In the above embodiment, preferably, the notification information combination apparatus 200 further includes a display unit 206 configured to distinguish and display target notification information of each system of the plurality of systems in response to a received display setting command.

In the above embodiment, by distinguishing and displaying target notification information of each system, the target notification information of each system may be more noticeable, and senses of the user can be further enhanced to provide a sufficient prompt for the user.

In the above embodiment, preferably, the display unit 206 is further configured to distinguish and display the target notification information of each system of the plurality of systems in different display colors, display formats and/or display fonts.

In the above embodiment, ways for distinguishing and displaying the target notification information may include, but are not limited to, above mentioned ways, such as setting an identifier for the target notification information of each system so as to distinguish and display the target notification information of each system, for example.

In the above embodiment, preferably, the notification information combination apparatus 200 further includes a prompt unit 208 configured to, when the current system of the terminal receives an execution command for processing target notification information of any target system, determine whether to prompt a user to input an encrypted password of the target notification information according to a determination result that determines whether the target notification information has been encrypted.

In the above embodiment, determining whether to prompt the user to input the encrypted password, according to the determination result that determines whether the user has encrypted the target notification information, can improve the user experience.

In the above embodiment, preferably, the notification information combination apparatus 200 further includes a processing unit 210 configured to, when target notification information of any other target system of the plurality of systems needs to be processed in the current system of the terminal: switch the current system to the target system and process the target notification information of the target system in the target system; or process the target notification information in the current system.

In the above embodiment, when the user processes the target notification information of the other target system in the current system, the user may select to stay in the current system or switch to the other target system, for processing the target notification information. This can satisfy requirements of different users, and can further improve the user experience. For example, if the user feels inconvenient to switch between the systems, the user can select to process the target notification information in the current system. If the user feels that it is too slow to process the target notification information in the current system, the current system can be switched to one target system that the target notification information belongs to, and then the target notification information can be processed.

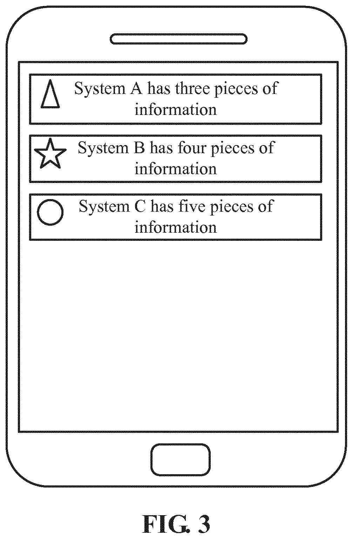

FIG. 3 shows a schematic diagram of one embodiment of a combination result of notification information according to the present disclosure.

Detailed descriptions combined with FIG. 3 are provided herein. In one embodiment, the notification information combination method (depending on the embodiment, it is assumed that a current system of the terminal is "system A") includes the following:

When an information center of the system A (the current system) receives notification information from the system A, system B, or system C, the information center of the system A combines the received notification information of the system A with other notification information received from the system A, combines the received notification information of the system B with other notification information received from the system B, and combines the received notification information of the system C with other notification information received from the system C. Combination results are shown as FIG. 3.

Moreover, as shown in FIG. 3, in the above embodiment, an identifier is inserted into each of the combined notification information of the system A, the system B and the system C, so as to distinguish and display the combined notification information of the system A, the system B and the system C.

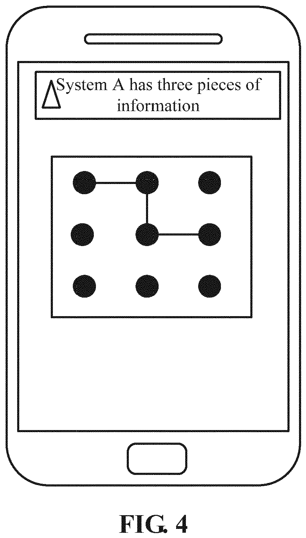

FIG. 4 shows a schematic diagram of one embodiment of a password input prompt for a user according to the present disclosure.

As shown in FIG. 4, as the notification information of the system A has been encrypted by the user, therefore, when the user views the notification information of the system A in any system, the terminal prompts the user to input a password. When the input password is correct, the user can view the notification information of the system A. Certainly, if the notification information of the system A has not been encrypted by the user, when the user views the notification information of the system A in any system, the terminal does not prompt the user to input the password.

The present disclosure has been explicated above by referring to the drawings. Notification information of different systems can be classified according to the systems, so as to reduce a number of times of switching the systems when a user views notification information of different systems in the current system, and improve the use experience.

Although certain inventive embodiments of the present disclosure have been specifically described, the present disclosure is not to be construed as being limited thereto. Various changes or modifications may be made to the present disclosure without departing from the scope and spirit of the present disclosure.

## Claims

1. A notification information combination method, applied to a terminal which comprises a plurality of systems, comprising:
receiving notification information by a current system of the terminal from any target system of the plurality of systems; and
combining the received notification information with other notification information received from the target system, and using the combined notification information as target notification information of the target system.

2. The notification information combination method of claim 1, further comprising:
in response to a received display setting command, distinguishing and displaying target notification information of each system of the plurality of systems.

3. The notification information combination method of claim 2, wherein the target notification information of each system of the plurality of systems is distinguished and displayed by:
distinguishing and displaying the target notification information of each system of the plurality of systems in different display colors, display formats and/or display fonts.

4. The notification information combination method of claim 1, further comprising:
when the current system of the terminal receives an execution command for processing target notification information of any target system, determining whether to prompt a user to input an encrypted password of the target notification information according to a determination result that determines whether the target notification information has been encrypted.

5. The notification information combination method of any one of claims 1 to 4, further comprising:
when target notification information of any other target system of the plurality of systems needs to be processed in the current system of the terminal:
switching the current system to the target system and processing the target notification information of the target system in the target system; or
processing the target notification information in the current system.

6. A notification information combination apparatus in a terminal, which comprises a plurality of systems, the notification information combination apparatus comprising:
a receiving unit configured to receive notification information by a current system of the terminal from any target system of the plurality of systems; and
a combination unit configured to combine the received notification information with other notification information received from the target system, and use the combined notification information as target notification information of the target system.

7. The notification information combination apparatus of claim 6, further comprising:
a display unit configured to distinguish and display target notification information of each system of the plurality of systems in response to a received display setting command.

8. The notification information combination apparatus of claim 7, wherein the display unit is further configured to:
distinguish and display the target notification information of each system of the plurality of systems in different display colors, display formats and/or display fonts.

9. The notification information combination apparatus of claim 6, further comprising:
a prompt unit configured to, when the current system of the terminal receives an execution command for processing target notification information of any target system, determine whether to prompt a user to input an encrypted password of the target notification information according to a determination result that determines whether the target notification information has been encrypted.

10. The notification information combination apparatus of any one of claims 6 to 9, further comprising a processing unit configured to:
when target notification information of any other target system of the plurality of systems needs to be processed in the current system of the terminal:
switch the current system to the target system and process the target notification information of the target system in the target system; or
process the target notification information in the current system.
